# EUROPÄISCHE PATENTSCHRIFT

(11) **EP 2 516 217 B1**
(45) Veröffentlichungstag und Bekanntmachung des Hinweises auf die Patenterteilung: **07.01.2015**
(21) Anmeldenummer: 11717460.7
(22) Anmeldetag: 23.02.2011
(51) Int. Cl.: B60R 21/38

(54) **VERRIEGELUNGSANORDNUNG FÜR EIN AUSLÖSBARES FRONTHAUBENSCHARNIER**
LOCKING ARRANGEMENT
SYSTÈME DE VERROUILLAGE CONÇU POUR UNE CHARNIÈRE DE CAPOT AVANT DÉCLENCHABLE

(30) Priorität: 23.02.2010 DE 102010009064
(43) Veröffentlichungstag der Anmeldung: 31.10.2012
(73) Patentinhaber: Edscha Engineering GmbH, 42855 Remscheid (DE)
(72) Erfinder: ACKERS, Heinrich, 52372 Kreuzau (DE); HERRMANN, Ralf, 42897 Remscheid (DE)
(74) Vertreter: Sparing, Rolf Klaus
(86) Internationale Anmeldenummer: PCT/DE2011/000177
(87) Internationale Veröffentlichungsnummer: WO 2011/103862

(56) Entgegenhaltungen:
- EP-A1- 1 431 136
- WO-A2-2004/041601

## Beschreibung

Die Erfindung betrifft eine Verriegelungsanordnung nach dem Oberbegriff des Anspruchs 1. Die Erfindung betrifft ferner ein aktives Fronthaubenscharnier nach dem Oberbegriff des Anspruchs 10. Die Erfindung betrifft schließlich auch eine Fronthaubenanordnung nach dem Oberbegriff des Anspruchs 12.

Aus der Praxis sind verschiedene Fronthaubenscharniere bekannt, die dazu bestimmt sind, im Falle eines detektierten Fußgängeraufpralls in eine angehobene Position verlagert zu werden, beispielsweise durch ein Federpaket, eine pyrotechnische Auslöseanordnung oder dergleichen, damit die in einer angehobenen Stellung beabstandet von den gefährdenden Komponente des Motorinnenraums gehaltene Fronthaube eine Deformation erfährt, die den Aufprall bremst. Darüber hinaus kann auch die Auslöseeinrichtung eine Bremsung der von dem Fußgängeraufprall herabgedrückten Fronthaube definieren.

DE 199 22 454 A1 zeigt verschiedene Ausführungsbeispiele von aktiven Fronthaubenanordnungen, bei denen eine Fronthaube durch eine Auslöseeinrichtung angehoben wird, wenn eine die Fronthabenanordnung haltende Riegeleinrichtung ausgelöst wird. Nachteilig hierbei ist, dass für das Lösen der Riegelanordnung und für das Auslösen der Auslöseanordnung unterschiedliche Stellglieder vorgesehen sind, mit der Folge, dass zu deren Triggerung ausreichend große Zeitabstände vorzusehen sind, mit der Folge, dass die Fronthaube oft nicht rechtzeitig aufgestellt werden kann.

WO 2006131628 A1 zeigt eine Fronthaubenanordnung, bei der ein erstes Befestigungsteil einer Fronthaube zugeordnet ist und ein zweites Befestigungs-teil des Scharniers einer Fahrzeugkarosserie zugeordnet ist, wobei das erste Befestigungsteil und das zweite Befestigungsteil gelenkig über eine Gelenkanordnung verbunden sind. Die Gelenkanordnung umfasst zwei Zwischenlenker, die einen Koppellenker gelenkig mit dem karosserieseitigen zweiten Befestigungsteil koppelt, während an den Koppellenker das erste Befestigungsteil über ein Eingelenk angeschlossen ist. Das Eingelenk dient für den konventionellen Betrieb der Fronthaube, während die Viergelenkanordnung zum Anheben des Koppellenkers dient, mit dem dann auch das erste Befestigungsteil durch Betätigung einer Auslöseeinrichtung angehoben wird. Die Auslöseeinrichtung ist als pyrotechnische Kolben-Zylinder-Einheit ausgebildet, deren Kolben in einem an dem Koppellenker angeordneten Führungsteil axial beweglich ist, wobei das Führungsteil hierzu um seine Achse schwenkbar ist. Ein stirnseitiges Ende des Kolbens steht in Berührung oder knapp vor Berührung mit einem Hebelarm eines Verriegelungshakens, der unter der Vorspannung einer Feder als Riegelteil den Koppellenker an dem zweiten Befestigungsteil verriegelt. Wird die Auslöseanordnung betätigt, stößt zunächst die Stirnseite des Kolbens den Riegel auf und anschließend wird der Koppellenker über einen gestuften Abschnitt der Kolbenstange mittels der Viergelenkanordnung von dem karosserieseitigen zweiten Befestigungsteil abgehoben, wobei zur Kompensation der auftretenden Bewegung noch eine Verschwenkung um die Gelenkachse des Eingelenks des Haubenscharniers erfolgen kann. Nachteilig an der bekannten Anordnung ist zum Einen das Erfordernis, die Auslöseeinrichtung baulich mit dem Scharnier zu verbinden, was dazu führt, dass die Auslöseeinrichtung in einem schwer zugänglichen zusammengepackten Bereich der Viergelenkanordnung eingesetzt ist. Ein weiterer Nachteil besteht darin, dass für das vertikale Aufstellen der Fronthaube ein vergleichsweise langer Verlagerungsweg der Kolbenstange erforderlich ist, die sich zumindest in einem Anfangsbereich der Verlagerung nahezu parallel zur Ebene der Fronthaube bewegt, so dass zum Einen die Gefahr des Verkantens besteht und zum Anderen der Hubweg der Fronthaube zugleich eine Bewegung in allen Gelenken erfordert, was wegen der zwangsläufig vorgesehenen Spiele in den Gelenken auch zu einer Fehlfunktion führen kann. Ein weiterer Nachteil der bekannten Anordnung besteht darin, dass im Falle eines dann tatsächlich eintretenden Fußgängeraufpralls die Kräfte über die Gelenke des Fahrzeugs eingeleitet werden. Schließlich besteht die Gefahr, dass durch die beim Fahrbetrieb, aber auch beim Rangieren oder bei einem Unfall des Fahrzeugs auftretenden Kräfte gerade in axialer Erstreckung, die derjenigen der Auslöseeinrichtung entspricht, eine unbeabsichtigte Auslösung des pyrotechnischen Elements erfolgen kann.

DE 103 32 818 A1 zeigt in einem Ausführungsbeispiel eine Verriegelungsanordnung für ein auslösbares Fronthaubenscharnier, bei dem ein erstes Befestigungsteil der Fronthaube zugeordnet ist und ein zweites Befestigungsteil der Fahrzeugkarosserie zugeordnet ist. Eine als Eingelenk ausgebildete Gelenkanordnung verbindet das erste Befestigungsteil mit dem zweiten Befestigungsteil zum konventionellen Öffnen und Schließen der Fronthaube. Eine zur Gelenkanordnung gehörende Kniehebelanordnung umfasst einen ersten Hebel, der gelenkig an dem der Fronthaube zugeordneten ersten Befestigungsteil angeschlossen ist, und einen zweiten Hebel, der über die die konventionelle Öffnungsbewegung zulassende Gelenkanordnung mit dem ersten Befestigungsteil verbunden ist, wobei die beiden Hebel der Kniehebelanordnung über ein gemeinsames Gelenk miteinander verbunden sind. Zum Sichern der Kniehebelanordnung in einer eingefalteten Stellung ist ein Sicherungsstift an einem von dem zweiten Hebel forttragenden Ende formschlüssig in einer Bohrung eingesetzt, wobei an dem der Bohrung abgekehrten Ende des Sicherungsstiftes ein Federblech mit seinem ersten Ende festgelegt ist, welches Federblech mit seinem dem ersten Ende gegenüberliegenden zweiten Ende an dem der Fahrzeugkarosserie zugeordneten zweiten Befestigungsteil angeschlossen ist. In einem der Bohrung gegenüberliegenden Bereich weist das zweite Befestigungsteil eine dem Durchmesser der Bohrung entsprechende weitere Bohrung auf. Hierdurch ist es möglich, dass eine Auslöseeinrichtung, die als Stellglied einer Kolben-Zylinder-Einheit ausgebildet ist, in einem Winkel von etwa 30 Grad auf das Kopfende des Verriegelungsstiftes, an dem das erste Ende des Federblechs ansetzt, auftrifft und den Verriegelungsstift derart in die fluchtende weitere Bohrung unter Deformierung des Federblechs verschiebt, dass die formschlüssige Verriegelung des zweiten Hebels an dem der Fahrzeugkarosserie zugeordneten zweiten Befestigungsteil aufgehoben wird. Dies ermöglicht ein Entfalten der Kniehebelanordnung und damit ein Anheben des der Fronthaube zugeordneten ersten Befestigungsteils, indem das Stellglied einen an dem ersten Befestigungsteil vorgesehenen Anschlag nach oben verlagert.

DE 10 2006 016 176 A1 zeigt eine Verriegelungsanordnung für ein auslösbares Fronthaubenscharnier, bei dem ein einer Fronthaube zugeordnetes erstes Befestigungsteil und ein einer Fahrzeugkarosserie zugeordnetes zweites Befestigungsteil gelenkig über eine Gelenkanordnung, die als Viergelenkanordnung ausgebildet ist und einen ersten Lenker und einen zweiten Lenker umfasst, verbunden sind. Das der Fronthaube zugeordnete erste Befestigungsteil ist als Grundplatte ausgebildet, an der die Gelenke des ersten und zweiten Lenkers angeordnet sind, wobei die Grundplatte mit einem Anschlussstück für die Motorhaube über ein Riegelglied verbunden ist. Das Riegelglied wird von einem Federglied in eine nicht ausgelöste Stellung vorgespannt, wobei das Riegelglied durch eine Auslöseeinrichtung, die als Stellglied mit ausfahrbarer Kolbenstange, die innenseitig einen Kopf aufweist, verlagerbar ist. Hierbei veranlasst der Kopf des Stellgliedes zunächst ein Spannen des Federgliedes zum Verlagern des Riegels in eine Richtung, bei der die beiden Teile außer Eingriff gelangen können, und verlagert dann durch Verschieben eines entsprechenden Anschlagteils des Anschlussstücks dieses mit der Fronthaube außer Eingriff mit der Grundplatte des ersten Befestigungsteils. Das Riegelglied ist von dem Federglied im Wesentlichen quer zu der Bewegungsrichtung der Auslöseeinrichtung vorgespannt. Grundplatte und Anschlussstück sind nicht gelenkig miteinander verbunden.

DE 10 2008 022 093 A1 zeigt eine Fronthaubenanordnung, bei der eine Fronthaube an ein erstes Befestigungsteil angeschlossen ist, während ein zweites Befestigungsteil der Fahrzeugkarosserie zugeordnet ist. Das erste Befestigungsteil und das zweite Befestigungsteil sind über eine als Eingelenk ausgebildete Gelenkanordnung zum konventionellen Öffnen und Schließen der Fronthaube gelenkig miteinander verbunden. Ein erster Hebel des zweiten Befestigungsteils ist an einem der Gelenkanordnung abgekehrten Ende über ein weiteres Gelenk mit einem zweiten Hebel verbunden, der über ein Gelenk an eine obere Schiene der Fahrzeugkarosserie gelenkig angeschlossen ist, so dass beide gemeinsam eine Kniehebelanordnung bilden. Das erste Hebel und der zweite Hebel weisen jeweils einen hiervon abstehenden Abschnitt, der eine Kreisform andeutet, auf, die bei geschlossener Fronthaube durch entsprechende Öffnungen in der oberen Schiene in dem Bereich des Motorraums vorstehen. Eine Auslöseeinrichtung, die als Spindelantrieb mit einer Spindelmutter und einer Gewindespindel ausgebildet ist, weist an einem beweglichen Ende einen Halter auf, der an dem der Fahrzeugkarosserie zugeordneten zweiten Befestigungsteil angeschlossen ist, wobei der Halter das Scharnier insgesamt in seiner nicht ausgelösten Position verriegelt. Bei einer Ausführungsform sind in der Auslöseeinrichtung Federn vorgesehen, die die Fronthaube über eine beaufschlagte Platte der Auslöseeinrichtung anheben, wenn an der Unterseite einer vorgespannten Platte vorgesehene Haken, die aneinander zugekehrt sind, außer Eingriff von zwischen den Haken vorgesehenen, aneinander abgekehrten Gegenhaken gelangen. Die Gegenhaken werden durch eine Feder derart auseinander vorgespannt, dass sie die Haken hintergreifen. Wird das Innenrohr des Spindelantriebs verlagert, überfahren an den Gegenhaken vorgesehene Vorsprünge entsprechende Gegenstücke, und die Gegenhaken werden entgegen der Vorspannung der Feder zusammengedrückt, wodurch die Haken von den Gegenhaken außer Eingriff gelangen und die Fronthaube unter der Vorspannung der Federn 95A angehoben wird.

DE 10 2004 004 987 A1 zeigt verschiedene Ausführungsbeispiele für Verriegelungsanordnungen für ein auslösbares Fronthaubenscharnier, bei dem jeweils ein der Fronthaube zugeordnetes erstes Befestigungsteil als Befestigungslasche ausgebildet ist, und ein der Fahrzeugkarosserie zugeordnetes zweites Befestigungsteil, das als Aufstellschwenkglied ausgebildet ist und über ein endseitiges Schwenkgelenk an der Fahrzeugkarosserie derart schwenkbar festgelegt ist, dass es aufgestellt werden kann, vorgesehen ist, wobei das erste Befestigungsteil und das zweite Befestigungsteil über eine als Eingelenk ausgebildete Gelenkanordnung, die das Schwenkgelenk für das konventionelle Öffnen und Schließen der Fronthaube bildet, gelenkig miteinander verbunden sind. Eine Auslöseeinrichtung, die als hydraulische Kolben-Zylinder-Einheit ausgebildet ist, umfasst eine an das zweite Befestigungsteil angeschlossene Kolbenstange, die bei ausgefahrener Kolbenstange das zweite, der Fahrzeugkarosserie zugeordnete Befestigungsteil zusammen mit dem Eingelenk und der Fronthaube anhebt, wobei das Eingelenk hierbei um das Schwenkgelenk herumgeschwenkt wird. Hierbei ist eine Verriegelungseinrichtung vorgesehen, die dann, wenn die Auslöseeinrichtung nicht ausgelöst wird, das der Fahrzeugkarosserie zugeordnete zweite Befestigungsteil gegen die Fahrzeugkarosserie verriegelt. Bei einer Ausführungsform der Verriegelungseinrichtung ist vorgesehen, dass ein als Riegelhebel ausgebildetes Riegelglied über ein Schwenkgelenk an der Fahrzeugkarosserie festgelegt ist und mittels einer Schraubenfeder in eine Verriegelungsposition vorgespannt ist, in der das Riegelglied einen Kantenbereich des der Fahrzeugkarosserie zugeordneten zweiten Befestigungsteils übergreift und damit fixiert. Wird die Kolbenstange der Auslöseeinrichtung verlagert, drückt diese den Riegelhebel entgegen der Vorspannung der Schraubenfeder um das Schwenkgelenk fort und gibt damit den Kantenbereich des zweiten Befestigungsteils frei. In einem weiteren Teil der Bewegung der Auslöseeinrichtung wird dann die Fronthaube mit dem Scharnier angehoben.

DE 10 2006 041 244 A1 zeigt eine Auslöseeinrichtung für eine Drehfalle, bei dem die Drehfalle einen Abschnitt mit Rastausnehmungen aufweist, in die als Kugel ausgebildete Rastelemente eingreifen können, wenn diese von einem Kolbenstück entsprechend in Richtung auf die Rastausnehmung verlagert werden. Eine Riegelvorrichtung umfasst ein mit dem Kolben in Kontakt stehendes Kniehebelaggregat, welches in einer Strecklage den Kolben formschlüssig derart fixiert, dass die Kugel in die Rastausnehmung gedrückt ist und in einer Knicklage ein Ausweichen der Kugel und des Kolbens ermöglicht. Um das Kniehebelaggregat in die Knicklage zu verbringen, ist ein elektromagnetisch antreibbarer Stößel vorgesehen, der bei Erregung einer Spule das Kniehebelaggregat entgegen der Vorspannung einer Feder in die Knicklage verlagert.

DE 10 2004 006 2105 A1 zeigt ein Fronthaubenscharnier, mit einem der Fronthaube zugeordneten ersten Befestigungsteil und einem der Fahrzeugkarosserie zugeordneten zweiten Befestigunsteil, wobei das erste Befestigungsteil und das zweite Befestigungsteil über eine als Eingelenk ausgebildete Gelenkanordnung gelenkig miteinander verbunden sind. Das der Fronthaube zugeordnete erste Befestigungsteil weist ein Basisteil auf, das den als Eingelenk ausgebildeten Drehpunkt enthält, und ist über eine auflösbare Hebeleirichtung mit einem Oberteil gekoppelt. Die Hebeleinrichtung umfasst einen ersten Hebel, der gelenkig mit dem Basisteil und mit dem Oberteil verbunden ist, und einen zweiten Hebel, der gelenkig mit dem Basisteil verbunden ist und ein Klinkenmaul aufweist, das einen Zapfenabschnitt des Oberteils umgreift. Um eine Schwenkbewegligkeit zwischen dem Oberteil und dem Basisteil zu verhindern, fixiert eine an dem Basisteil vorgesehene, als doppelarmiger Hebel ausgebildete und von einer Feder in Verriegelungsrichtung vorgespannte Sperrklinke den zweiten Hebel mit einem ersten Klinkenarm. Wird eine Auslöseeinrichtung ausgelöst, belastet diese zuerst den dem zweiten Hebel abgekehrten Klinkenarm der Sperrklinke und löst damit den von einer Schenkelfeder in Ausrückrichtung vorgespannten zweiten Hebel aus, sodass das Deckelteil nur noch über den ersen Hebel mit dem Basisteil gelenkig verbunden ist. Durch die weitere Verlagerung der Auslöseeinrichtung wird dann das gesamte der Fronthaube zugeordnete Befestigunsteil sowie die Fronthaube angehoben.

DE 103 27 838 A1 zeigt eine Auslöseeinrichtung zum Betätigen eines Bolzens eines Fronthaubenscharniers, bei dem der Bolzen in einer langlochartigen Öffnung des Fronthaubenscharniers sowie in den beiden Schenkeln eines U-förmigen Mitnehmerglieds einer Auslöseeinrichtung eingesetzt ist. Ein Riegelglied ist in einer Aufnahme des Fronthaubenscharniers im Wesentlichen quer zur Verlagerungsrichtung der Auslöseeinrichtung und ohne Vorspannung verlagerbar, wobei das Riegelglied einen Rampenabschnitt aufweist, der ein Langloch in einem Schenkel der Mitnehmereinrichtung durchsetzt und mit einem Vorsprung in eine Aufnahme eines Verriegelungsteils, das vermeintlich einem karosserieseitigen Befestigungsteil zugeordnet sein dürte, eingreift. Durch das Riegelglied ist eine Relativbewegung zwischen dem Verriegelungsteil und dem Fronthaubenscharnier blockiert, solange der Vorsprung in die Aufnahme des Verriegelungsteils eingreift. Wird die Auslöseeinrichtung ausgelöst, bewirkt die Verlagerung des das Langloch begrenzenden Abschnitts des Schenkels in Verbindung mit der Rampenfläche des Riegelteils eine axiale Verlagerung des Riegelglieds fort von der Aufnahme des Verriegelungsteils und hebt damit die Blockierung auf. Der hierfür erforderliche Arbeitshub ist kürzer bemessen als die Größe der Öffnung im Motorhaubenscharnier für den Bolzen, so dass der Arbeitshub nach Aufhebung der Blockierung durch Anschlagen des Bolzens an dem Fronthaubenscharnier fortgesetzt werden kann.

Es ist die Aufgabe der Erfindung, eine Verriegelungsanordnung bzw. ein aktives Fronthaubenscharnier bzw. eine Fronthaubenanordnung anzugeben, die zuverlässig und einfach ausgelöst werden kann.

Diese Aufgabe wird erfindungsgemäß durch eine Verriegelungsanordnung mit den Merkmalen des Anspruchs 1, durch ein aktives Fronthaubenscharnier mit den Merkmalen des Anspruchs 10 und eine Fronthaubenanordnung mit den Merkmalen des Anspruchs 12 gelöst.

Die erfindungsgemäße Verriegelungsanordnung koppelt eines von dem ersten, der Fronthaube zugeordneten Befestigungsteil oder dem zweiten, der Karosserie zugeordneten zweiten Befestigungsteil mit einem Lenker der Gelenkanordnung, wobei eine formschlüssige Verriegelung derart aufhebbar vorgesehen ist, dass diese Koppelung aufgehoben werden kann.

Gemäß einer ersten Weiterbildung kann hierbei vorgesehen sein, dass das zweite, der Karosserie zugeordnete Befestigungsteil mit diesem Lenker verriegelt wird, während ein beweglicher Teil der Gelenkanordnung eine konventionelle Verschwenkung der Fronthaube durch die zwischen dem ersten Befestigungsteil und dem Lenker vorgesehenen Teile der Gelenkanordnung zulässt. Vorzugsweise wird aber das erste, der Fronthaube zugeordnete Befestigungsteil mit einem Lenker der Gelenkanordnung gekoppelt und verriegelt, wodurch die miteinander verbundene Teile Lenker und erstes Befestitungsteil in Folge der Verriegelung wie ein Teil gegenüber dem zweiten, der Karosserie zugeordneten Befestigungsteil auf- und zugeschwenkt werden können. Die zwischen dem Lenker und dem karosserieseitigen zweiten Befestigungsteil vorgesehene Gelenkanordnung kann hierbei eine Eingelenkanordnung sein, vorzugsweise handelt es sich aber um eine Mehrgelenkanordnung, insbesondere eine Viergelenkanordnung oder eine Siebengelenkanordnung.

Das Riegelglied ist durch eine Auslöseeinrichtung entgegen der Verriegelungsrichtung verlagerbar, wodurch das Riegelglied außer Eingriff mit seinem Gegenstück bringbar ist und damit die Verriegelung aufhebt. Hierzu ist die Vorspannung des das Riegelglied beaufschlagende Federglieds zu überwinden, wobei die Kraft der Auslöseeinrichtung, die die Vorspannung des Riegelglieds in Verriegelungsrichtung überwindet, quer und vorzugsweise senkrecht zu der Wirkrichtung der Feder vorgesehen ist. Damit ist sichergestellt, dass bei Auslösen der Auslöseeinrichtung ein minimaler Verlust der Kraft auf Grund der wirkenden Momente bzw. von Winkeln kleiner 90 Grad erfolgt. Ferner ist hierdurch sichergestellt, dass bei im Laufe des Betriebs oder bei Unfällen auftretende Kräfte, die an dem Vorderbau des Fahrzeugs und damit an den Scharnieren und auch der Verriegelungseinrichtung angreifenden Kräfte nicht ein unbeabsichtigtes Auslösen der Verriegelungseinrichtung bewirkt wird.

Vorzugsweise beaufschlagt die Auslöseeinrichtung ein Druckstück, das in dem entsprechenden Befestigungselement oder aber in dem Lenker der Lenkeranordnung entsprechend axial geführt ist, in eine Richtung auf das Federglied, so dass das Federglied elastisch deformiert wird. Die elastische Deformation des Federglieds, die zu einer Spannung der Feder führt, ohne dass diese plastisch ihre Form ändert, zieht das Riegelglied außer Eingriff und gibt die Verriegelung frei. Durch das Vorsehen eines Druckstücks ist es möglich, die Auslöseeinrichtung, beispielsweise eine pyrotechnische Kolben-Zylinder-Einrichtung, mit einer recht breiten stirnseitigen Kolbenfläche auszustatten, so dass die Gefahr eines Ausknickens vemieden wird, wobei gleichwohl sichergestellt ist, dass erst über das Druckstück das Riegelglied außer Eingriff verlagert wird und dann eine Kraft in die Fronthaube bzw. ein der Fronthaube zugeordnetes Befestigungsteil eingeleitet wird. Hierdurch lassen sich Toleranzen, die sonst zu einem Verkanten und möglicherweise zu einer Funktionsstörung führen, vorteilhaft vermeiden.

Die Auslöseeinrichtung ist hierbei mit einem verlagerbaren Glied zweckmäßigerweise gegen eine Unterseite des ersten Befestigungsteils gerichtet, die beispielsweise von dem ersten Befestigungsteil auch in einer gesonderten Ebene seitlich abstehen kann, und hebt nach Entriegeln des Riegelglieds das erste Befestigungsteil von der Gelenkanordnung ab. Ist die Verriegelung zwischen dem zweiten Befestigungsteil und dem Lenker vorgesehen, wird der Lenker abgehoben, und damit mittelbar das erste Befestigungsteil von dem Lenker der Gelenkanordnung abgehoben.

Zweckmäßigerweise umfasst die Gelenkanordnung wenigstens ein Viergelenk, das einen Koppellenker und eines der Befestigungsteile gelenkig miteinander verbindet. Vorzugsweise ist das andere Gelenk, das das andere Befestigungsteil mit dem Lenker gelenkig verbindet, als Eingelenk ausgebildet, es besteht aber die Möglichkeit diese auch als Viergelenk auszubilden. Schließlich kann auch jede der beiden gelenkigen Verbindungen zwischen dem Lenker und dem jeweiligen Befestigungsteil als Eingelenk ausgebildet sein, wodurch dann nur ein Lenker die beiden Befestigungsteile miteinander verbindet, wobei eine Schwenkbeweglichkeit zwischen dem Lenker und einem der Befestigungsteile durch die Verriegelungsanordnung unterbunden ist.

Zweckmäßigerweise hintergreift das Riegelglied einen Verriegelungsvorsprung der Gelenkanordnung, wobei dies vorzugsweise der Gestalt ausgebildet ist, dass das Riegelglied einen Verriegelungsvorsprung eines Lenkers der Gelenkanordnung hintergreift. Es ist aber alternativ auch möglich, das Riegelglied an dem Lenker vorzustehen und den Verriegelungsvorsprung an dem jeweiligen Befestigungsteil. Es ist schließlich auch möglich, bei Ausgestaltung der Gelenkanordnung als Viergelenkanordnung, dass ein Befestigungsteil mit einem Zwischenlenker der Viergelenkanordnung verriegelt wird, so dass mittelbar die Basis der Viergelenkanordnung, die einen Lenker der Gelenkanordnung bildet, mit dem entsprechenden Befestigungsteil verriegelt ist.

Vorzugsweise ist das Federglied als Blattfeder ausgebildet, die beispielsweise aus einem Federblech ausgestanzt ist. Die Blattfeder ist hierbei zweckmäßigerweise an einem Ende an dem zu verriegelnden Befestigungsteil und an einem anderen Ende an dem Riegelglied festgelegt, so dass die Deformation der Blattfeder den Abstand zwischen der Befestigung des Federglieds und dem Riegelglied entsprechend beeinflusst.

Zweckmäßigerweise umfasst das erste Befestigungsteil einen abgewinkelten Vorsprung, der im Wesentlichen senkrecht zu der Befestigungsfläche mit der Fronthaube verläuft und dessen Unterseite gegen ein der Karosserie zugeordnetes Anschlagteil anschlägt. Wird das der Fronthaube zugeordnete erste Befestigungsteil mit einem von der Ebene der Fronthaube abgewinkelten, im Wesentlichen senkrecht zu der Ebene verlaufende Vorsprung ausgestattet, kann dieser gegen eine Karosserie zugeordnetes Anschlagglied anschlagen, das zugleich den konventionellen Verlagerungsweg der Fronthaube mittels der Gelenkanordnung begrenzt. Hierdurch wird ferner sichergestellt, dass auch nach Auslösen der Auslöseeinrichtung und deren Ersatz bzw. Wiederherstellen das entsprechende Befestigungsteil in eine Entstellung verbracht werden kann, in der das Riegelglied wieder in den Verriegelungsvorsprung der Gelenkanordnung eingreifen kann.

Weitere Vorteile, Merkmale und Eigenschaften der Erfindung ergeben sich aus der nachstehende Beschreibung eines bevorzugten Ausführungsbeispiels sowie aus den abhängigen Ansprüchen.

Die Erfindung wird nunmehr unter Bezugnahme auf die anliegenden Zeichnungen anhand eines bevorzugten Ausführungsbeispiels der Erfindung näher erläutert.
- Fig. 1: zeigt eine Explosionsdarstellung eines bevorzugten Ausführungsbeispiels einer erfindungsgemäßen Verriegelungsanordnung.
- Fig. 2: zeigt einen Ausschnitt der Verriegelungsanordnung gemäß Fig. 1 im teilweise zusammengebauten Zustand.
- Fig. 3: zeigt in drei Schaubildern (a), (b) und (c) die Verriegelungsanordnung gemäß Fig. 1 im zusammengebauten und unbetätigten, betätigten und weiter betätigten Zustand.

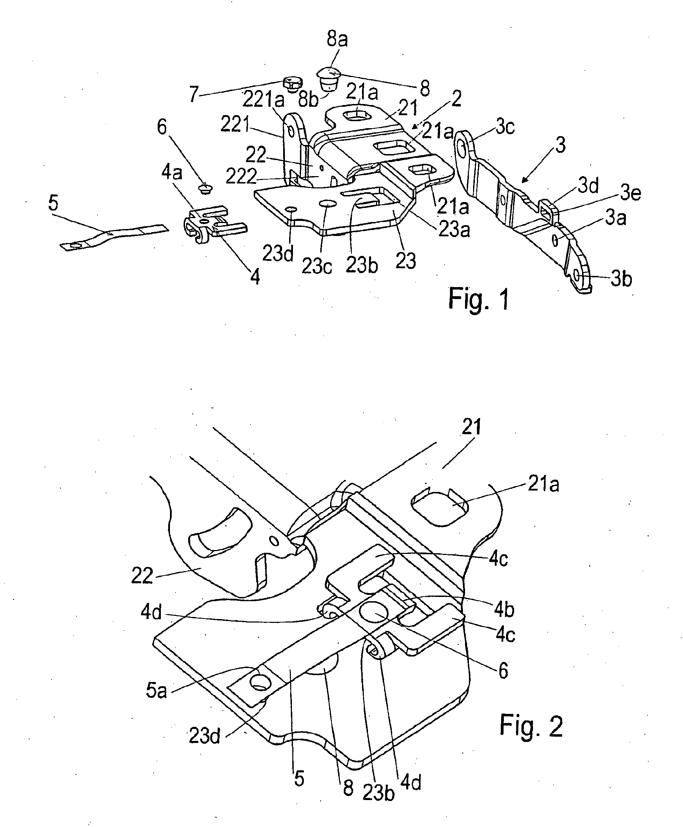

In Fig. 1 sind als Teile einer Fronthaubenanordnung bzw. eines auslösbaren Fronthaubenscharniers 1 im noch nicht zusammengesetzten Zustand ein als Befestigungsteil für eine Fronthaube ausgebildetes erstes Befestigungsteil 2 gezeigt, ferner ein zu einer Lenkeranordnung gehöroger Lenker 3 sowie ein Riegelglied 4 und ein Federglied 5.

Das erste Befestigungsteil 2 ist als Blechstanz- und -biegeteil aus einem Stück hergestellt und weist eine an die Form einer Fronthaube angepasste Flachseite 21 auf, die mit Durchbrechungen 21a versehen ist. Von der Flachseite 21 erstreckt sich ein abgebogener Bereich 22, der im Wesentlichen senkrecht zu dem Abschnitt 21 verläuft und sich von der Fronthaube aus betrachtet nach unten erstreckt. Der vertikale Abschnitt 22 umfasst einen rückwärtigen Abschnitt 221 auf, in dem ein Lagerauge 221a für die Verbindung mit dem Lenker 3 vorgesehen ist, sowie einen vorderen Abschnitt 222, der sich V-artig nach unten erstreckt und der gegen ein Anschlagteil der Fahrzeugkarosserie in Anlage gelangen kann.

Von dem horizontalen Abschnitt 21 erstreckt sich weiter ein flacher Abschnitt 23, der gegenüber dem horizontalen Abschnitt 21 eine Stufung nach unten aufweist und damit etwas niedriger angeordnet ist als die Flachseite 21, und der benachbart zu dem vertikalen Abschnitt 22 an einem dessen rückwärtigen Abschnitt 221 abgekehrten Ende angeordnet ist. Der flache Abschnitt 23 weist eine im Wesentlichen rechteckige Aussparung 23a auf, in die ein Vorsprung 23b, der einstückig aus dem flacher Abschnitt 23 gebildet ist und der in etwa rechteckig ausgebildet ist, hineinragt. Der Abschnitt 23 weist ferner eine zentrale Öffnung 23c auf sowie ein Befestigungsloch 23d auf, wobei das Befestigungsloch 23d, die Öffnung 23c und der Vorsprung 23b im Wesentlichen auf einer Achse liegen.

Bei dem Lenker 3 handelt es sich um einen Koppellenker eines Viergelenkgetriebes, das mittels eines in dem Auge 3a angelenkten ersten Zwischenlenkers und in dem Auge 3b angelenkten zweiten Zwischenlenkers eines Viergelenks an ein zweites Befestigungsteil, das der Karosserie zugeordnet ist und mit dieser befestigt ist, verschwenkbar gekoppelt ist. Die Betätigung des Viergelenks führt zu einer Öffnungs- und Schließbewegung des Koppellenkers 3, wenn die Fronthaube geöffnet oder geschlossen wird. An seinem den Gelenkaugen 3a, 3b abgekehrten Ende weist der Koppellenker 3 ein Gelenkauge 3c auf, das mit dem Gelenkauge 221a des ersten Befestigungsteils 2 gelenkig verbindbar ist, so dass grundsätzlich eine Verschwenkbarkeit der Fronthaube, die an dem ersten Befestigungsteil 2 angeschlossen ist, gegenüber dem Koppellenker 3 ermöglicht ist. Der Koppellenker 3 weist ferner einen Verriegelungsabschnitt 3d mit einer Verriegelungsaussparung 3e auf, der von der Oberkante des Koppellenkers 3 nach oben vorsteht, wobei die Form des Koppellenkers 3 derart auf das erste Befestigungsteil 2 abgestimmt ist, dass bei Verbindung der Gelenkaugen 3c, 221 a der Verriegelungsabschnitt 3d durch die Aussparung 23a des ersten Befestigungsteil 2 nach oben vorsteht.

Das Riegelglied 4 ist aus einem Blechteil ausgestanzt und weist neben einer Aufnahme 4a zum Einsetzen des Verbindungselements 6 und anschließenden Vernieten einen Keilabschnitt 4b auf, der zentral im Wesentlichen in Verlängerung des Federglieds 5 vorsteht, sowie zwei seitliche Vorsprünge 4c auf, wobei die untere Seite des Keilabschnitts 4b bzw. der seitlichen Vorsprünge 4c flach ausgebildet ist und damit auf der eben ausgebildeten Oberseite der Fläche 23 gleiten kann. In einem rückwärtigen, dem Keilabschnitt 4b abgekehrten Bereich sind zwei Flügelbereiche 4d des Riegelglieds 4 um ca. 180° derart umgefaltet, dass sie den Vorsprung 23b der Fläche 23 umgreifen können, wobei der Abstand der beiden abgefalteten Flügel 4d kleiner als die Breite der Durchbrechung 23a und möglichst an die Breite des Vorsprungs 23b angepasst ist, so dass das Riegelglied 4 auf den Vorsprung 23b aufgesetzt und nach hinten in eine Ausgangsposition verschoben werden kann.

Man erkennt insbesondere in Fig. 2, in der der Riegelabschnitt des Koppellenkers 3 nicht gezeigt ist, dass der Riegelabschnitt 3d des Koppellenkers in den sich ergebenen Freiraum, der seitlich von den seitlichen Flügeln 4c und der Durchbrechung 23a begrenzt ist, eindringen kann. Man erkennt ferner, dass das Federglied 5 dazu neigt, sich zu entspannen und sich damit seiner maximale Ausdehnung anzunehmen. Damit wird der Keilabschnitt 4b des Riegelglieds 4 durch die Verriegelungsaussparung 3e des Verriegelungsabschnitts 3d des Koppellenkers 3 hindurchgedrückt und verriegelt damit das erste Befestigungsteil 2 an den Koppellenker 3. Damit ist sichergestellt, dass der Koppellenker 3 mit dem ersten Befestigungsteil 2 formschlüssig verbunden ist, und dass bei konventioneller Betätigung der Fronthaube die Fronthaube zusammen mit dem Koppellenker 3 in ihre geöffnete bzw. geschlossene Position verlagert wird.

Mitteils eines ersten, als Niet ausgebildeten Verbindungsglieds 6 ist das als Federblechabschnitt oder Blattfeder ausgebildete Federglied 5 an einem Ende mit dem Riegelelement 4 verbunden. Mittels eines zweiten, als Schraube ausgebildeten Verbindungsglieds 7 ist das Federglied 5 an seinem anderen Ende in dem Befestigungsloch 23d des ersten Befestigungsteils 2 festgelegt. Damit bildet das zweite Verbindungsglied 7 ein Widerlager für das Federglied 5 und das Riegelglied 6, gegen das die Federkraft F_{F} des Federglieds 5 abgestützt wird.

Ein Druckstück 8 ist in die zentrale Öffnung 23c des ersten Befestigungsteil 2 eingesetzt und weist einen Kopfabschnitt 8a mit einem größeren Durchmesser als die Öffnung 23c auf, so dass das Druckstück 8 nicht durch die Öffnung 2a hindurch fallen kann. Eine Mantelfläche 8b des Druckstücks 8 ist größer bemessen als die Dicke des flachen Abschnitts 23 des ersten Befestigungsteils 2, so dass das dem Kopfbereich 8a abgekehrte Ende des Mantelabschnitts 8b ein größeres Stück unterhalb der Unterkante des flachen Abschnitts 23 des ersten Befestigungsteils 2 verläuft.

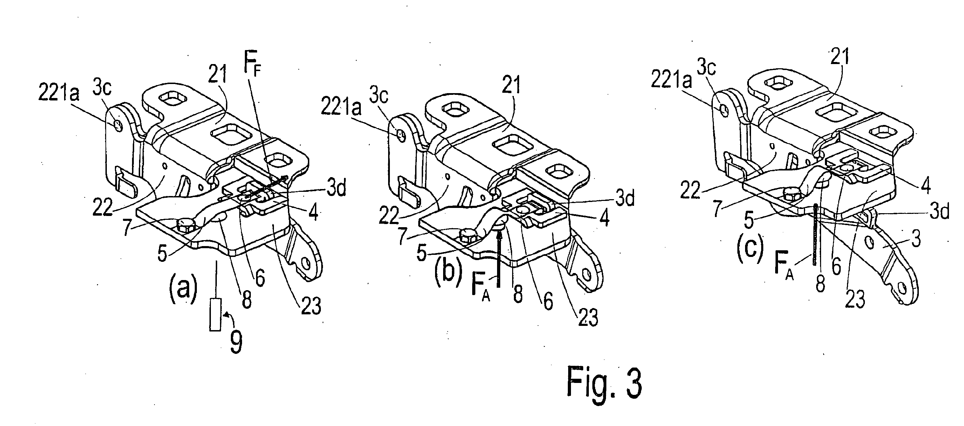

Unter Bezugnahme auf Fig. 3 wird nun die Funktionsweise der Verriegelungsanordnung näher erläutert.

In Fig. 3(a) erkennt man, dass das Federglied 5 das Riegelglied 4 mit der Kraft F_{F} nach vorne verlagert, und dass dabei der Keilabschnitt 4b des Riegelglieds 4 in die Verriegelungsaussparung 3e des Verriegelungsabschnitts 3d des Koppellenkers 3 eindringt. Damit sind der Koppellenker 3 und das erste Befestigungselement 2 formschlüssig miteinander verbunden und gegenseitig fixiert. Die Größe der Verriegelungsaussparung 3e lässt ein Eindringen des Keilabschnitts 4b zu, wobei das Federglied 5 den Keilabschnitt 4b so weit vorschiebt, dass kein Spiel mehr zwischen dieser Verriegelung besteht, so dass das erste Befestigungsteil 2 ebenfalls spielfrei an dem Koppellenker 3 festgelegt ist. Man erkennt ferner, dass das Federglied 5 in seiner Mitte eine geringfügige Wölbung nach oben ausweist, die ausreicht, dass das Druckstück 8 nicht an der Blattfeder anliegt, sondern dass dessen Kopf 8a mit einem minimalen Abstand unterhalb der Unterseite des Federglieds 5 verläuft. Hierdurch ist ferner sichergestellt, dass die Spannung des Federglieds 5 von dem Druckstück 8 nicht entlastet wird.

Wird nun, wie in Fig. 3(b) angedeutet, ein Teil einer - in Fig. 3a schematisch dargestellte - Auslöseeinrichtung 9 von unten mit einer Kraft F_{A} gegen die untere Seite des flachen Abschnitts 23 des ersten Befestigungselements 2 und dem hieraus nach unten vorstehenden Mantelbereich 8b des Druckstücks 8 gedrückt, wird zunächst das Druckstück 8 mit seinem Kopf 8a unter Kraft F_{A} nach oben verlagert und spannt damit das Federglied 5 bzw. veranlasst dieses durch den größeren erforderlich werdenden Weg dazu, dass Riegelglied 4 zurückzuziehen, bis der Keilabschnitt 4b des Riegelgliedes 4 außer Eingriff mit der Verriegelungsaussparung 3e des Verriegelungsabschnitts 3d des Koppellenkers 3 gelangt.

Nach der Entriegelung gemäß Fig. 3(b) diesem Moment besteht die in Fig. 3(c) gezeigte Möglichkeit, dass das erste Befestigungsteil 2 um die durch das gemeinsame Gelenk 221a, 3c mit dem Koppellenker 3 gebildete Achse gegenüber dem Koppellenker 3 weiter nach oben verschwenkt wird, wie in Fig. 3(c) dargestellt. Die Kraft F_{A} der Auslöseeinrichtung beaufschlagt dann die Unterseite des flachen Abschnitts 23 des ersten Befestigungsteils 2 und verschwenkt dieses damit um die Achse 221 a, 3c und hebt damit die Fronthaube, die dann über die Öffnungen 21 a an dem ersten Befestigungsteil 2 festgelegt ist, gegenüber der aus dem Koppellenker 3 und den beiden Verbindungslenkern sowie der eine Basis bildenden karosserieseitigen weiteren Befestigungsteil an. Damit kann die Fronthaube durch die Auslöseeinrichtung in eine angehobene Position verlagert werden, in der die Fronthaube eine ausreichende Nachgiebigkeit aufweist, um einen Fußgängeraufprall auf die Fronthaube abzudämpfen.

Die Auslöseeinrichtung 9, die in den Zeichnungen nur schematisch dargestellt ist, kann sowohl als Kolben-Zylinderanordnung, bei der ein Kolben in Richtung nach oben ausgestoßen wird, ausgebildet sein, als auch als Federanordnung, die durch ein Riegelteil in Position gehalten wird.

Man erkennt, dass die vorstehend erläuterte Erfindung es ermöglicht, mit einer Beaufschlagung zugleich den Riegel zu lösen und das der Fronthaube zugeordnete erste Befestigungsteil 2 anzuheben, ohne das hierfür der Kolben in irgendeiner Form gestuft ausgebildet sein muss. Hierdurch können entsprechende Standardteile unterschiedlicher Lieferanten eingesetzt werden, und auch ein Austausch der Komponenten nach einer Fehlauslösung oder einem Fußgängeraufprall ist ohne weiteres möglich. Durch die reversible Deformation des Federglieds, die nicht zu einer plastischen Formänderung führt, kann die Verriegelungsanordnung auch vorübergehend, beispielsweise nach einer Fehlauslösung, wieder fixiert werden, selbst wenn die Auslöseeinrichtung außer Betrieb ist, um eine Werkstatt anzufahren. Ferner weist die Anordnung den Vorteil auf, dass das Scharnier in derselben Ausführung verbaut werden kann, wenn die jeweils nationalen Vorschriften keine Fußgängeraufprallsicherheit vorschreiben, indem die Auslöseeinrichtung weggelassen wird; diese kann bei Bedarf wiederum nachgerüstet werden. Schließlich kann die Auslöseeinrichtung leicht ausgetauscht werden, indem die Fronthaube in üblicher Weise geöffnet wird und die Auslöseeinrichtung entweder außerhalb des Scharniers angeordnet ist oder wenigstens leicht zugänglich an dem Scharnier angeordnet ist. In dem Fall, in dem keine Auslösung zu Fußgängeraufprallschutzzwecken vorgesehen ist, kann auch auf ein Verbauen des Druckstücks 8 verzichtet werden, so dass das Federglied 5 das Riegelglied 4 dauerhaft in Eingriffstellung hält.

Die Erfindung ist vorstehend anhand eines Ausführungsbeispiels beschrieben worden, bei dem ein Druckstück 8 verbaut ist, welches den Vorteil hat, dass dieses in der entsprechenden zentralen Öffnung 23c sicher axial geführt ist und nicht bei einem Anhebevorgang verkantet. Es versteht sich, dass es alternativ möglich ist, die Kolbenstange der Auslöseeinrichtung gestuft auszubilden und einen vorderen Stirnbereich der gestuften Kolbenstange die zentrale Öffnung 23c durchsetzen zu lassen, um das Federglied 5 zu deformieren. Hierbei wird die Öffnung 23c zweckmäßigerweise als Langloch auszubilden sein, da die Schwenkbewegung um die Achse 3c, 221a sonst zu einem Verkannten der Kolbenstange in der Öffnung 23c führt. Eine weitere Ringstufe der Kolbenstange wird dann in Anlage gegen die Unterseite des flachen Abschnitts 23 des ersten Befestigungsteil 2 gelangen, um dieses nach oben zu verlagern.

Die Erfindung ist vorstehend anhand eines Ausführungsbeispiels erläutert worden, bei dem der mit dem ersten Befestigungsteil verbundene Lenker 3 ein Koppellenker eines Viergelenks ist, also zwei weitere Verbindungslenker vorgesehen sind, um den Koppellenker 3 mit einem karosserieseitigen zweiten Befestigungsteil zu verbinden. Es versteht sich, dass es auch möglich ist, den Lenker 3 gelenkig mit einem karosserieseitigen zweiten Befestigungsteil schwenkbar zu verbinden, so dass ein Eingelenk zum Öffnen und Schließen der Fronthaube gebildet ist. Schließlich ist es auch möglich, dass die gelenkige Verbindung des Hebels 3 mit dem ersten Befestigungsteil 2 als Mehrgelenkanordnung, insbesondere als Viergelenkanordnung ausgebildet ist, die durch die Verriegelung bis zur Auslösung unbeweglich gehalten ist.

Die Erfindung ist vorstehend anhand eines Ausführungsbeispiels erläutert worden, bei dem die das als Federblatt ausgebildete Federglied quer zur Fahrtrichtung auf einem gesondert abgestellen flachen Abschnitt des ersten haubenseitigen Befestigungsteils vorgesehen ist. Es versteht sich, dass es auch möglich ist, das Federblatt im Wesentlichen in Fahrtrichtung auf einem vertieften Oberflächenabschnitt der Flachseite 21 des ersten Befestigungsteils 2 anzuordnen, wodurch das entsprechende Befestigungsteil weniger massiv ausfällt.

Die Erfindung ist vorstehend anhand eines Ausführungsbeispiels erläutert worden, bei der Koppellenker 3 eine umlaufend geschlossene Verriegelungsaussparung 3e in dem Verriegelungsabschnitt 3d aufweist. Es versteht sich, dass es schon ausreicht, wenn ein von dem Koppellenker 3 abgewinkelter Abschnitt so weit in die Aussparung 23a des ersten Befestigungsteils 2 eindringt, dass das Riegelglied 4 zuverlässig hierzwischen einsetzbar ist und die formschlüssige Verbindung herstellt.

## Patentansprüche

1. Verriegelungsanordnung für ein auslösbares Fronthaubenscharnier, umfassend
ein einer Fronthaube zugeordnetes erstes Befestigungsteil (2);
ein einer Fahrzeugkarosserie zugeordnetes zweites Befestigungsteil;
eine das erste Befestigungsteil (2) und das zweite Befestigungsteil gelenkig verbindende Gelenkanordnung (3), und
ein das erste Befestigungsteil (2) oder das zweite Befestigungsteil gegenüber der Gelenkanordnung (3) oder dem jeweils anderen Befestigungsteil in einer nicht ausgelösten Stellung verriegelndes Riegelglied (4), das an eines der zu verriegelnden Teile angeschlossen ist.
wobei das Riegelglied (4) von einem Federglied (5) in eine Verriegelungsrichtung vorgespannt ist, und
wobei das Riegelglied (4) durch eine Auslöseeinrichtung (9) entgegen der Verriegelungsrichtung verlagerbar ist,
**dadurch gekennzeichnet,**
**dass** das Riegelglied (4) zumindest überwiegend senkrecht zu einer Kraft der Auslöseeinrichtung (9) von dem Federglied (5) vorgespannt ist, und dass das Riegelglied (4) entgegen der Verriegelungsrichtung axial verlagerbar ist.

2. Verriegelungsanordnung nach Anspruch 1, **dadurch gekennzeichnet, dass** die Auslöseeinrichtung ein Druckstück (8) beaufschlagt, das das Federglied (5) elastisch deformiert, welches hierdurch das Riegelglied (4) außer Eingriff zieht.

3. Verriegelungsanordnung nach Anspruch 2, **dadurch gekennzeichnet,**
**dass** das Druckstück (8) von einer der Auslöseeinrichtung (9) gegenüberliegenden Seite zwischen dem Federglied (5) und dem zu verriegelnden Teil, an das das Riegelglied (4) angeschlossen ist, eingesetzt ist.

4. Verriegelungsanordnung nach einem der Ansprüche 1 bis 3, **dadurch gekennzeichnet, dass** die Auslöseeinrichtung (9) das Riegelglied (4) beim Entriegeln in Richtung auf die Auslöseeinrichtung (9) verlagert, und dass Führungsmittel des Riegelgliedes (4) die Entriegelungsbewegung des Riegelgliedes (4) derart begrenzen, dass das Riegelglied (4) außerhalb einer Berührung mit der Auslöseeinrichtung (9) stoppt.

5. Verriegelungsanordnung nach einem der Ansprüche 1 bis 4, **dadurch gekennzeichnet, dass** die Auslöseeinrichtung gegen eine Unterseite des ersten Befestigungsteils (2) gerichtet ist und nach Entriegeln des Riegelglieds (4) das erste Befestigungsteil (2) von der Gelenkanordnung (3) abhebt.

6. Verriegelungsanordnung nach einem der Ansprüche 1 bis 5, **dadurch gekennzeichnet, dass** die Gelenkanordnung als Viergelenk ausgebildet ist, und dass das erste Befestigungsteil (2) über ein Eingelenk (221a, 3c) an einem Koppelteil (3) der Gelenkanordnung schwenkbar angeschlossen ist.

7. Verriegelungsanordnung nach einem der Ansprüche 1 bis 6, **dadurch gekennzeichnet, dass** das Riegelglied (4) einen Verriegelungsvorsprung der Gelenkanordnung (3) hintergreift.

8. Verriegelungsanordnung nach einem der Ansprüche 1 bis 7, **dadurch gekennzeichnet, dass** das Federglied als Blattfeder (5) ausgebildet ist, die an einem Ende an dem zu verriegelnden Befestigungsteil (2) festgelegt ist und die an einem anderen Ende an dem Riegelglied (4) festgelegt ist.

9. Verriegelungsanordnung nach einem der Ansprüche 1 bis 8, **dadurch gekennzeichnet, dass** ein von dem ersten Befestigungsteil (2) abgewinkelter Vorsprung (22) gegen ein der Karosserie zugeordnetes Anschlagglied anschlägt.

10. Aktives Fronthaubenscharnier, umfassend
ein einer Fronthaube zugeordnetes erstes Befestigungsteil (2);
ein einer Fahrzeugkarosserie zugeordnetes zweites Befestigungsteil;
eine das erste Befestigungsteil (2) und das zweite Befestigungsteil gelenkig verbindende Gelenkanordnung (3), und
ein das erste Befestigungsteil (2) oder das zweite Befestigungsteil gegenüber der Gelenkanordnung (3) oder dem jeweils anderen Befestigungsteil in einer nicht ausgelösten Stellung verriegelndes Riegelglied (4), das an eines der zu verriegelnden Teile angeschlossen ist,
wobei das Riegelglied (4) von einem Federglied (5) in eine Verriegelungsrichtung vorgespannt ist, und
wobei das Riegelglied (4) durch eine Auslöseeinrichtung (9) entgegen der Verriegelungsrichtung verlagerbar ist,
**dadurch gekennzeichnet,**
**dass** das Riegelglied (4) zumindest überwiegend senkrecht zu einer Kraft der Auslöseeinrichtung von dem Federglied (5) vorgespannt ist, und dass das Riegelglied (4) entgegen der Verriegelungsrichtung axial verlagerbar ist.

11. Aktives Fronthaubenscharnier nach Anspruch 10, **gekennzeichnet durch** eine Verriegelungsanordnung nach einem der Ansprüche 1 bis 9.

12. Fronthaubenanordnung, umfassend
ein mit einer Fronthaube verbundenes erstes Befestigungsteil (2) ;
ein einer Fahrzeugkarosserie verbundenes zweites Befestigungsteil;
eine das erste Befestigungsteil (2) und das zweite Befestigungsteil gelenkig verbindende Gelenkanordnung (3), und
ein das erste Befestigungsteil (2) oder das zweite Befestigungsteil gegenüber der Gelenkanordnung (3) oder dem jeweils anderen Befestigungsteil in einer nicht ausgelösten Stellung verriegelndes Riegelglied (4), das an eines der zu verriegelnden Teile angeschlossen ist,
wobei das Riegelglied (4) von einem Federglied (5) in eine Verriegelungsrichtung vorgespannt ist, und
wobei das Riegelglied (4) durch eine Auslöseeinrichtung (9) entgegen der Verriegelungsrichtung verlagerbar ist,
**dadurch gekennzeichnet,**
**dass** das Riegelglied (4) zumindest überwiegend senkrecht zu einer Kraft der Auslöseeinrichtung von dem Federglied (5) vorgespannt ist, und dass das Riegelglied (4) entgegen der Verriegelungsrichtung axial verlagerbar ist.

13. Fronthaubenanordnung nach Anspruch 12, **gekennzeichnet durch** ein mit einer Verriegelungsanordnung nach einem der Ansprüche 1 bis 9 ausgestattetes aktives Fronthaubenscharnier.

14. Fronthaubenanordnung nach Anspruch 12 oder 13, **dadurch gekennzeichnet, dass** das erste Befestigungsteil (2) gegenüber der Gelenkanordnung (3) verschwenkbar ausgebildet ist und bei Betätigung der Auslöseeinrichtung zunächst das Riegelglied (4) entgegen der Verriegelungsrichtung verlagert wird und dann das erste Befestigungsteil (2) gegenüber der Gelenkanordnung (3) verschwenkt wird.

15. Fronthaubenanordnung nach einem der Ansprüche 12 bis 14, **dadurch gekennzeichnet, dass** bei Betätigung der Auslöseeinrichtung (9), die einen axialen Hub ausführt, zunächst Federglied (5) gespannt wird, wodurch das Riegelglied (4) entgegen der Verriegelungsrichtung in Richtung der Auslöseeinrichtung (9) außer Eingriff mit dem zu verriegelnden Teil gezogen wird, und dass anschließend das erste Befestigungsteil (2), an das das Riegelglied (4) und das Federglied (5) angeschlossen sind, gemeinsam mit der Fronthaube angehoben wird, wobei die Spitze der Auslöseeinrichtung (9) auch nach Entriegelung weiter das Federglied (5) in Belastungsrichtung beaufschlagt.

## Claims

1. A locking arrangement for a releasable bonnet hinge, comprising
a first fastening part (2) associated with a bonnet;
a second fastening part associated with a vehicle body;
a linkage arrangement (3) connecting the first fastening part (2) and the second fastening part in articulated manner, and
a locking element (4) which locks the first fastening part (2) or the second fastening part in a non-released position with respect to the linkage arrangement (3) or the respective other fastening part and is connected to one of the parts to be locked,
wherein the locking element (4) is pre-tensioned in a locking direction by a spring element (5), and
wherein the locking element (4) can be displaced counter to the locking direction by a release device (9),
**characterised in**
**that** the locking element (4) is pre-tensioned at least predominantly perpendicularly to a force of the release device (9) by the spring element (5), and
**that** the locking element (4) can be displaced axially counter to the locking direction.

2. The locking arrangement according to claim 1, **characterised in that** the release device acts on a pressure piece (8) which deforms the spring element (5) elastically, which thereby draws the locking element (4) out of engagement.

3. The locking arrangement according to claim 2, **characterised in that** the pressure piece (8) is inserted from a side opposite the release device (9) between the spring element (5) and the part to be locked, to which the locking element (4) is connected.

4. The locking arrangement according to one of claims 1 to 3, **characterised in that** the release device (9) displaces the locking element (4) in a direction of the release device (9) during the unlocking procedure, and that guide means of the locking element (4) delimit the unlocking movement of the locking element (4) in such a way that the locking element (4) stops out of contact with the release device (9).

5. The locking arrangement according to one of claims 1 to 4, **characterised in that** the release device is directed towards an underside of the first fastening part (2) and lifts the first fastening part (2) away from the linkage arrangement (3) after the locking element (4) is unlocked.

6. The locking arrangement according to one of claims 1 to 5, **characterised in that** the linkage arrangement is constructed as a four-joint linkage and **in that** the first fastening part (2) is pivotably connected to a coupling part (3) of the linkage arrangement by way of a single-joint linkage (221a, 3c).

7. The locking arrangement according to one of claims 1 to 6, **characterised in that** the locking element (4) reaches behind a locking projection of the linkage arrangement (3).

8. The locking arrangement according to one of claims 1 to 7, **characterised in that** the spring element is constructed as a flat spring (5) which is fixed at one end to the fastening part (2) to be locked and is fixed at another end to the locking element (4).

9. The locking arrangement according to one of claims 1 to 8, **characterised in that** a projection (22) which is angled away from the first fastening part (2) strikes against a stop element associated with the vehicle body.

10. An active bonnet hinge, comprising
a first fastening part (2) associated with a bonnet;
a second fastening part associated with a vehicle body;
a linkage arrangement (3) connecting the first fastening part (2) and the second fastening part in articulated manner, and
a locking element (4) which locks the first fastening part (2) or the second fastening part in a non-released position with respect to the linkage arrangement (3) or the respective other fastening part and is connected to one of the parts to be locked,
wherein the locking element (4) is pre-tensioned in a locking direction by a spring element (5), and
wherein the locking element (4) can be displaced counter to the locking direction by a release device (9),
**characterised in**
**that** the locking element (4) is pre-tensioned at least predominantly perpendicularly to a force of the release device (9) by the spring element (5), and
**that** the locking element (4) can be displaced axially counter to the locking direction.

11. The active bonnet hinge according to claim 10, **characterised by** a locking arrangement according to one of Claims 1 to 9.

12. A bonnet arrangement, comprising
a first fastening part (2) connected to a bonnet;
a second fastening part connected to a vehicle body;
a linkage arrangement (3) connecting the first fastening part (2) and the second fastening part in articulated manner, and
a locking element (4) which locks the first fastening part (2) or the second fastening part in a non-released position with respect to the linkage arrangement (3) or the respective other fastening part and is connected to one of the parts to be locked,
wherein the locking element (4) is pre-tensioned in a locking direction by a spring element (5), and
wherein the locking element (4) can be displaced counter to the locking direction by a release device (9),
**characterised in**
**that** the locking element (4) is pre-tensioned at least predominantly perpendicularly to a force of the release device (9) by the spring element (5), and
**that** the locking element (4) can be displaced axially counter to the locking direction.

13. The bonnet arrangement according to claim 12, **characterised by** an active bonnet hinge equipped with a locking arrangement according to one of claims 1 to 9.

14. The bonnet arrangement according to claim 12 or 13, **characterised in that** the first fastening part (2) is constructed to be pivotable with respect to the linkage arrangement (3) and, upon actuation of the release device, the locking element (4) is firstly displaced counter to the locking direction and the first fastening part (2) is then pivoted with respect to the linkage arrangement (3).

15. The bonnet arrangement according to one of claims 12 to 14, **characterised in that**, upon actuation of the release device (9), which executes an axial thrust, the spring element (5) is firstly tensioned, whereby the locking element (4) is drawn out of engagement with the part to be locked, counter to the locking direction in the direction of the release device (9), and that the first fastening part (2), to which the locking element (4) and the spring element (5) are connected, is then raised together with the bonnet, whereby the tip of the release device (9) also further acts on the spring element (5) in the loading direction after the unlocking procedure.

## Revendications

1. Système de verrouillage d'une charnière de capot avant libérable, ledit système comprenant
un premier élément de fixation (2) associé à un capot avant ;
un deuxième élément de fixation associé à la carrosserie du véhicule ;
un système articulé (3) reliant de façon articulée le premier élément de fixation (2) et le deuxième élément de fixation, et
un élément de verrouillage (4) relié à l'un des éléments à verrouiller et verrouillant le premier élément de fixation (2) ou le deuxième élément de fixation par rapport au système articulé (3) ou à l'autre élément de fixation respectif dans une position non libérée, l'élément de verrouillage (4) étant précontraint par un élément ressort (5) dans un sens de verrouillage, et
l'élément de verrouillage (4) étant déplaçable par un dispositif de libération (9) dans le sens opposé au sens de verrouillage,
**caractérisé en ce**
**que** l'élément de verrouillage (4) est précontraint par l'élément ressort (5) au moins essentiellement perpendiculairement à une force du dispositif de libération (9), et
**que** l'élément de verrouillage (4) est déplaçable axialement dans le sens opposé au sens de verrouillage.

2. Système de verrouillage selon la revendication 1, **caractérisé en ce que** le dispositif de libération sollicite un élément de pression (8) qui déforme élastiquement l'élément ressort (5) qui se dégage ainsi de l'élément de verrouillage (4).

3. Système de verrouillage selon la revendication 2, **caractérisé en ce que** l'élément de pression (8) est inséré, depuis un côté opposé au dispositif de libération (9), entre l'élément ressort (5) et l'élément à verrouiller auquel l'élément de verrouillage (4) est raccordé.

4. Système de verrouillage selon l'une des revendications 1 à 3, **caractérisé en ce que** le dispositif de libération (9) déplace l'élément de verrouillage (4) lors du déverrouillage en direction du dispositif de libération (9), et que des moyens de guidage de l'élément de verrouillage (4) limitent le mouvement de déverrouillage de l'élément de verrouillage (4) de telle sorte que l'élément de verrouillage (4) s'arrête hors contact avec le dispositif de déclenchement (9).

5. Système de verrouillage selon l'une des revendications 1 à 4, **caractérisé en ce que** le dispositif de déclenchement est dirigé vers un côté inférieur du premier élément de fixation (2) et, après déverrouillage de l'élément de verrouillage (4), enlève le premier élément de fixation (2) du système articulé (3).

6. Système de verrouillage selon l'une des revendications 1 à 5, **caractérisé en ce que** le système articulé est configuré en quadrilatère articulé, et que le premier élément de fixation (2) est raccordé de manière pivotante, par l'intermédiaire d'un pivot unique (221 a, 3c), à un élément d'accouplement (3) du système articulé

7. Système de verrouillage selon l'une des revendications 1 à 6, **caractérisé en ce que** l'élément de verrouillage (4) s'engage en arrière d'une saillie de verrouillage du système articulé (3).

8. Système de verrouillage selon l'une des revendications 1 à 7, **caractérisé en ce que** l'élément ressort est configuré en ressort à lame (5) qui est fixé par une extrémité à l'élément de fixation (2) à verrouiller et par une autre extrémité à l'élément de verrouillage (4).

9. Système de verrouillage selon l'une des revendications 1 à 8, **caractérisé en ce qu'**une saillie (22), s'étendant angulairement depuis le premier élément de fixation (2), vient en butée contre l'élément de butée associé à la carrosserie.

10. Charnière active de capot avant, ladite charnière comprenant
un premier élément de fixation (2) associé à un capot avant ;
un deuxième élément de fixation associé à la carrosserie du véhicule ;
un système articulé (3) reliant de façon articulée le premier élément de fixation (2) et le deuxième élément de fixation, et
un élément de verrouillage (4) relié à l'un des éléments à verrouiller et verrouillant le premier élément de fixation (2) ou le deuxième élément de fixation par rapport au système articulé (3) ou à l'autre élément de fixation respectif dans une position non libérée, l'élément de verrouillage (4) étant précontraint par un élément ressort (5) dans un sens de verrouillage, et
l'élément de verrouillage (4) étant déplaçable par un dispositif de libération (9) dans le sens opposé au sens de verrouillage, **caractérisé en ce**
**que** l'élément de verrouillage (4) est précontraint par l'élément ressort (5) au moins essentiellement perpendiculairement à une force du dispositif de libération (9), et
**que** l'élément de verrouillage (4) est déplaçable axialement dans le sens opposé au sens de verrouillage.

11. Charnière active de capot avant selon la revendication 10, **caractérisée par** un système de verrouillage selon l'une des revendications 1 à 9.

12. Système de capot avant comprenant
un premier élément de fixation (2) raccordé à un capot avant ;
un deuxième élément de fixation raccordé à la carrosserie du véhicule ;
un système articulé (3) reliant de façon articulée le premier élément de fixation (2) et le deuxième élément de fixation, et
un élément de verrouillage (4) relié à l'un des éléments à verrouiller et verrouillant le premier élément de fixation (2) ou le deuxième élément de fixation par rapport au système articulé (3) ou à l'autre élément de fixation respectif dans une position non libérée, l'élément de verrouillage (4) étant précontraint par un élément ressort (5) dans un sens de verrouillage, et
l'élément de verrouillage (4) étant déplaçable par un dispositif de libération (9) dans le sens opposé au sens de verrouillage,
**caractérisé en ce**
**que** l'élément de verrouillage (4) est précontraint par l'élément ressort (5) au moins essentiellement perpendiculairement à une force du dispositif de libération (9), et
**que** l'élément de verrouillage (4) est déplaçable axialement dans le sens opposé au sens de verrouillage.

13. Système de capot avant selon la revendication 12, **caractérisé par** une charnière active de capot avant équipée d'un système de verrouillage selon l'une des revendications 1 à 9.

14. Système de capot avant selon la revendication 12 ou 13, **caractérisé en ce que** le premier élément de fixation (2) est configuré de manière pivotante par rapport au système articulé (3) et, lors de l'actionnement du dispositif de libération, l'élément de verrouillage (4) est tout d'abord déplacé dans le sens opposé au sens de verrouillage puis le premier élément de fixation (2) est pivoté par rapport au système articulé (3).

15. Système de capot avant selon l'une des revendications 12 à 14, **caractérisé en ce que**, lors de l'actionnement du dispositif de libération (9) qui effectue une course axiale, l'élément ressort (5) est tout d'abord contraint de telle sorte que l'élément de verrouillage (4) est dégagé de l'élément à verrouiller dans le sens opposé au sens de verrouillage en direction du dispositif de libération (9), et qu'ensuite le premier élément de fixation (2), auquel sont raccordés l'élément de verrouillage (4) et l'élément ressort (5), est soulevé conjointement avec le capot avant, la pointe du dispositif de libération (9) exerçant, également après déverrouillage, une contrainte continue sur l'élément ressort (5).
